# EUROPÄISCHE PATENTSCHRIFT

(11) **EP 1 067 010 B1**
(45) Veröffentlichungstag und Bekanntmachung des Hinweises auf die Patenterteilung: **15.05.2013**
(21) Anmeldenummer: 00113512.8
(22) Anmeldetag: 26.06.2000
(51) Int. Cl.: B60M 1/26

(54) **Radspanner für Nachspanneinrichtungen von Fahrdrähten und Tragseilen einer Kettenwerk-Oberleitungsanlage**
Pulley assembly for tensioning apparatus for conductors and supporting wires in a catenary overhead wire system
Ensemble de poulie pour appareil tendeur pour fils et câbles d'une ligne de traction électrique

(30) Priorität: 09.07.1999 DE 19932195
(43) Veröffentlichungstag der Anmeldung: 10.01.2001
(73) Patentinhaber: Siemens Aktiengesellschaft, 80333 München (DE)
(72) Erfinder: Leray, Philippe, Dipl-Ing., 67061 Ludwigshafen (DE); Rankers, Marten, Dipl.-Ing., 68163 Mannheim (DE)

(56) Entgegenhaltungen:
- DE-C- 963 784
- DE-U- 29 713 425
- FR-A- 1 116 276
- GB-A- 2 220 402

## Beschreibung

Die Erfindung betrifft einen Radspanner für Nachspanneinrichtungen von Fahrdrähten und Tragseilen einer Kettenwerk-Oberleitungsanlage mit einem Radspannerrad, welches eine im Durchmesser größere Trommel sowie eine im Durchmesser kleinere Trommel aufweist, und mit wenigstens einem Rastelement, das mit wenigstens einer Rastverzahnung zusammenwirkt, die an der im Durchmesser größeren Trommel angeordnet ist.

Ein gattungsgemäßer Radspanner für Nachspanneinrichtungen von Fahrdrähten und Tragseilen einer Kettenwerk-Oberleitungsanlage ist z. B. aus der DE 297 13 425 U1 bekannt. Bei den bekannten Nachspanneinrichtungen ist im montierten Zustand über die im Durchmesser größere Trommel ein Seil für ein Nachspanngewicht und über die im Durchmesser kleinere Trommel ein Abspannseil für das Kettenwerk geführt. Die Nachspanneinrichtungen halten zusammen mit den Nachspanngewichten selbsttätig und temperaturunabhängig eine gleichmäßige Zugkraft im Fahrdraht und im Tragseil aufrecht. Die Nachspanngewichte sind als Gewichtssäulen aufgebaut, wobei die Zugkraft mittels einzelner Beton- oder Metallkörper eingestellt wird. Die Gewichtssäule wird an einer parallel am Mast oder an der Wand des Bauwerks befestigten Stange geführt. Bei geeigneter Mastausbildung kann die Gewichtssäule auch im Inneren eines Mastes geführt werden.

Das im Betriebszustand freihängende Radspannerrad wird bei Zugentlastung aufgrund eines Seil- oder Fahrdrahtrisses durch eine Fangvorrichtung arretiert, die bei den bekannten Nachspanneinrichtungen von der Rastverzahnung an der Außenumfangsfläche der im Durchmesser größeren Trommel und dem Rastelement gebildet wird. Bei einem Seilriß oder einem Fahrdrahtriß kann das Nachspanngewicht (Gewichtssäule) damit nicht zu Boden fallen. Weiterhin wird durch die Arretierung sichergestellt, daß die Oberleitungsaggregate nur geringfügig aus ihrer ursprünglichen Arbeitslage herausbewegt und dadurch möglicherweise beschädigt werden.

Die bekannten Nachspanneinrichtungen gewährleisten nur für Nachspanngewichte bis zu 1 t Gewicht eine zuverlässige Sperrwirkung im Störfall. Um bei Kettenwerk-Oberleitungsanlagen die Anzahl der Nachspanneinrichtungen zu reduzieren, ist es jedoch erforderlich schwerere Nachspanngewichte zu verwenden. Dies ist bei den bekannten Radspannern nicht möglich.

Weiterhin ist aus der Patentschrift DE 963 784 ein Radspanner mit einem Radspannerrad bekannt. Das Radspannerrad weist an seinen beiden äußeren Flanken Reibkränze auf, die mit einem Bremselement symmetrisch zusammenwirken.

Aufgabe der vorliegenden Erfindung ist es, einen Radspanner zu schaffen, der auch wesentlich schwerere Nachspanngewichte zuverlässig abfangen und sperren kann.

Die Aufgabe wird bei einer Nachspanneinrichtung nach dem Oberbegriff von Anspruch 1 erfindungsgemäß durch die Merkmale im kennzeichnenden Teil dieses Anspruchs gelöst. Vorteilhafte Ausgestaltungen der Erfindung sind in den weiteren Ansprüchen beschrieben.

Der Radspanner gemäß Anspruch 1 umfaßt ein Radspannerrad, welches eine im Durchmesser größere Trommel und eine im Durchmesser kleinere Trommel sowie wenigstens ein Rastelement aufweist, wobei das Rastelement mit wenigstens einer Rastverzahnung zusammenwirkt, die an der im Durchmesser größeren Trommel angeordnet ist. Erfindungsgemäß ist jeweils wenigstens eine Rastverzahnung an den beiden äußeren Flanken der im Durchmesser größeren Trommel angeordnet, wobei das Rastelement symmetrisch mit den Rastverzahnungen zusammenwirkt.

Bei der erfindungsgemäßen Lösung greift im Störungsfall (Seil- oder Fahrdrahtriß) die an den beiden äußeren Flanken der im Durchmesser größeren Trommel angeordnete Rastverzahnung in das Rastelement ein. Dabei wird die durch das fallende Nachspanngewicht erzeugte Drehbewegung des Radspannerrades mittels Reibung fast bis zum Stillstand abgebremst. Das Sperren erfolgt, sobald der Zahngrund in das Rastelement fällt.

Durch die Kombination von Bremsen und Einrasten wird der beim Sperren des erfindungsgemäßen Radspanners zwangsläufig auftretende Stoß beim Arretieren des Radspannerrades gemindert wobei das Radspannerrad gleichzeitig fixiert wird.

Durch die Kombination der Rastverzahnungen mit dem Rastelement wird das Sperren des Radspannerrades erfindungsgemäß in zwei Schritte unterteilt. Zunächst erfolgt das Fangen. Hierbei handelt es sich um ein durch Reibung erzieltes Abbremsen des Radspannerrades. Im zweiten Schritt erfolgt ein durch Formschluß bedingtes Fixieren des Radspannerrades.

Dadurch, daß jeweils wenigstens eine Rastverzahnung an den beiden äußeren Flanken der im Durchmesser größeren Trommel angeordnet ist und daß das Rastelement symmetrisch mit den Rastverzahnungen zusammenwirkt, können durch den erfindungsgemäßen Radspanner Nachspanneinrichtungen mit schwereren Nachspanngewichten verwendet werden.

Ein Ausführungsbeispiel der Erfindung wird nachfolgend in der Zeichnung näher erläutert. Es zeigen:
- FIG 1: eine Ausführung eines Radspanners gemäß der Erfindung in einer perspektivischen Ansicht,
- FIG 2: eine radiale Draufsicht auf den Radspanner gemäß FIG 1.

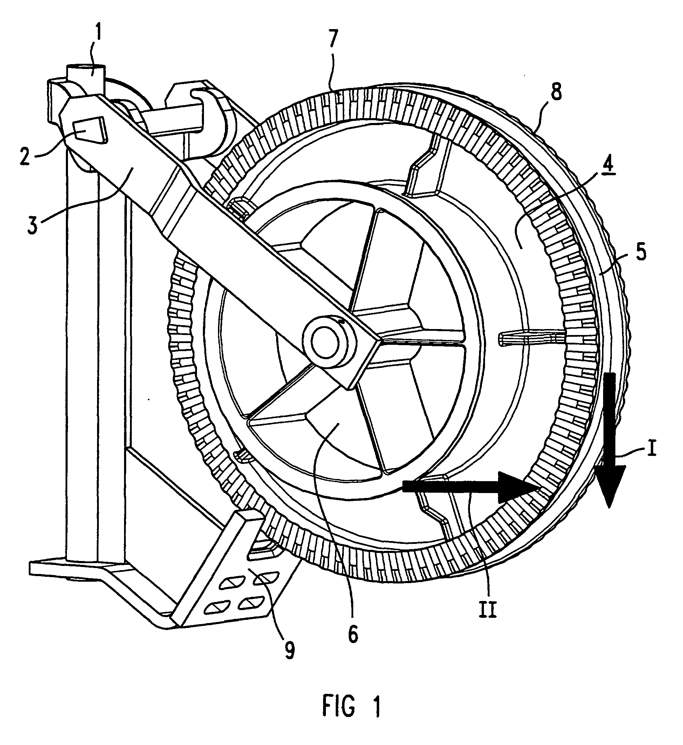

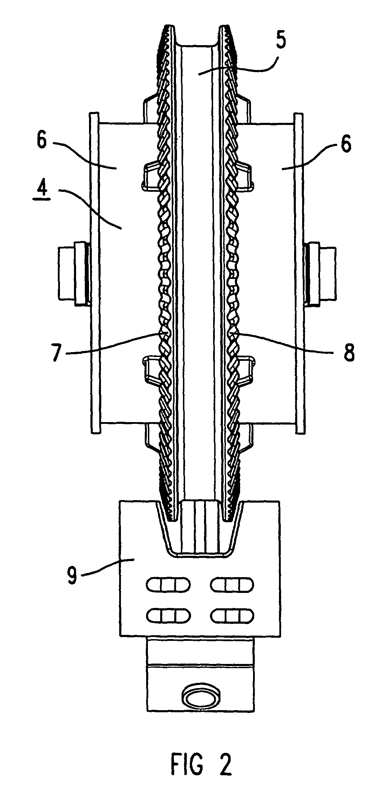

Die FIG 1 und 2 zeigen jeweils einen komplett montierten Radspanner. Er umfaßt ein Befestigungsteil 1, mit dem der Radspanner an einem Mast oder an einer Wand befestigbar ist. Am Befestigungsteil 1 ist mittels eines Drehgelenks 2 eine Wippe 3 angeordnet, an der das mit 4 bezeichnete Radspannerrad drehbar und schwenkbar gelagert ist. Das Radspannerrad 4 weist eine im Durchmesser größere Trommel 5 und eine im Durchmesser kleinere Trommel 6 auf. Im montierten Zustand ist an der im Durchmesser größeren Trommel 5 ein Seil für ein Nachspanngewicht geführt und an der im Durchmesser kleineren Trommel 6 ein Abspannseil zur Abspannung des Kettenwerkes befestigt. Die Gewichtskraft des Nachspanngewichtes ist in FIG 1 mit einem Pfeil I bezeichnet. Die auftretende Zugkraft der Oberleitung ist in FIG 1 mit einem Pfeil II gekennzeichnet. Das Seil für das Nachspanngewicht, das Nachspanngewicht sowie das Abspannseil sind in den FIG 1 und 2 nicht dargestellt.

Die im Durchmesser größere Trommel 5 weist an ihren beiden äußeren Flanken erfindungsgemäß jeweils eine Rastverzahnung 7 bzw. 8 auf. Die Rastverzahnungen 7 und 8 besitzen im dargestellten Ausführungsbeispiel ein kegeliges Wellenprofil.

Weiterhin umfaßt der erfindungsgemäße Radspanner ein Rastelement 9, das symmetrisch mit den Rastverzahnungen 7 und 8 zusammenwirkt. Bei der in den FIG 1 und 2 dargestellten Ausführungsform des erfindungsgemäßen Radspanners ist das Rastelement 9 als im wesentlichen V-förmige Sperrplatte ausgebildet und wirkt symmetrisch mit den Rastverzahnungen 7 und 8 zusammen.

Im Störungsfall greift das kegelige Wellenprofil der Rastverzahnungen 7 und 8 in die V-förmige Sperrplatte 9 ein. Dabei wird die durch das fallende Nachspanngewicht erzeugte Drehbewegung des Radspannerrades 4 mittels Reibung fast bis zum Stillstand abgebremst. Das Sperren erfolgt, sobald der Wellengrund des kegeligen Wellenprofils der Rastverzahnungen 7 und 8 in die V-förmige Sperrplatte 9 fällt.

Durch die Kombination von Bremsen und Einrasten wird der Stoß des Sperrens gemindert und das Radspannerrad 4 fixiert.

Durch die Kombination der Rastverzahnungen 7 und 8 mit dem Rastelement 9 wird das Sperren des Radspannerrades 4 in zwei Schritte unterteilt. Zunächst erfolgt das Fangen. Hierbei handelt es sich um ein durch Reibung erzieltes Abbremsen des Radspannerrades 4. Im zweiten Schritt erfolgt ein durch Formschluß bedingtes Fixieren des Radspannerrades 4.

## Patentansprüche

1. Radspanner für Nachspanneinrichtungen von Fahrdrähten und Tragseilen einer Kettenwerk-Oberleitungsanlage
- mit einem Radspannerrad (4), welches eine im Durchmesser größere Trommel (5) sowie eine im Durchmesser kleinere Trommel (6) aufweist,
- und mit wenigstens einem Rastelement (9), das mit wenigstens einer Rastverzahnung (7, 8) zusammenwirkt, die an der im Durchmesser größeren Trommel (5) angeordnet ist,
**dadurch gekennzeichnet,**
- **daß** jeweils wenigstens eine Rastverzahnung (6; 7) mit kegeligem Wellenprofil an den beiden äußeren Flanken der im Durchmesser größeren Trommel (5) angeordnet ist
- und **daß** das Rastelement (9) im Störungsfall derart symmetrisch mit den Rastverzahnungen (6, 7) zusammenwirkt,
- **daß** durch Eingreifen der Rastverzahnung (7, 8) in das Rastelement (9) ein durch Reibung erzieltes Abbremsen des Radspannerrades (4) und, sobald der Zahngrund der Rastverzahnung (7, 8) in das Rastelement (9) fällt, ein durch Formschluß bedingtes Fixieren des Radspannerrades (4) erfolgt.

2. Radspanner nach Anspruch 1,
**dadurch gekennzeichnet,**
**daß** die Rastverzahnungen (7; 8) symmetrisch ausgebildet sind.

3. Radspanner nach Anspruch 1 oder 2,
**dadurch gekennzeichnet,**
**daß** das Rastelement (9) als im wesentlichen V-förmige Sperrplatte ausgebildet ist.

## Claims

1. Wheel tensioner for tensioning devices of contact wires and carrying cables of a catenary overhead wire system,
- with a wheel tensioner wheel (4) which has a drum (5) of larger diameter and a drum (6) of smaller diameter,
- and with at least one latching element (9) which interacts with at least one latching toothing (7, 8), which is arranged on the drum (5) of larger diameter, **characterized**
- **in that** at least one latching toothing (6; 7) having a conical undulating profile is arranged on each of the two outer flanks of the drum (5) of larger diameter,
- and **in that**, in the event of a malfunction, the latching element (9) interacts symmetrically with the latching toothings (6, 7) in such a manner
- that, by engagement of the latching toothing (7, 8) in the latching element (9), the wheel tensioner wheel (4) is braked by means of friction and, as soon as the tooth base of the latching toothing (7, 8) drops into the latching element (9), the wheel tensioner wheel (4) is fixed by means of an interlocking connection.

2. Wheel tensioner according to Claim 1, **characterized in that** the latching toothings (7; 8) are formed symmetrically.

3. Wheel tensioner according to Claim 1 or 2, **characterized in that** the latching element (9) is in the form of a substantially V-shaped locking plate.

## Revendications

1. Tendeur à roue pour des dispositifs de retension de fils de contact et de câbles porteurs d'une installation de ligne de contact à caténaire,
- comprenant une roue ( 4 ) de tendeur à roue, qui a un tambour ( 5 ) de diamètre plus grand ainsi qu'un tambour ( 6 ) de diamètre plus petit,
- et comprenant au moins un élément ( 9 ) d'encliquetage, qui coopère avec au moins une denture (7, 8) d'encliquetage montée sur le tambour ( 5 ) de diamètre plus grand, **caractérisé**
- **en ce que** respectivement au moins une denture (6, 7) d'encliquetage à profil ondulé conique est disposée sur les deux flancs extérieurs du tambour ( 5 ) de diamètre plus grand,
- et **en ce que** l'élément ( 9 ) d'encliquetage coopère en cas d'incident symétriquement avec les dentures (6, 7) d'encliquetage,
- de manière à ce que, par pénétration de la denture ( 7, 8 ) d'encliquetage dans l'élément (9) d'encliquetage, il se produise un freinage produit par frottement de la roue ( 4 ) de tendeur à roue et, dès que le fond de dent de la denture ( 7, 8) d'encliquetage tombe dans l'élément ( 9 ) d'encliquetage, une immobilisation, par complémentarité de forme, de la roue ( 4 ) de tendeur à roue.

2. Tendeur à roue suivant la revendication 1,
**caractérisé**
**en ce que** les dentures ( 7, 8 ) d'encliquetage sont constituées de manière symétrique.

3. Tendeur à roue suivant la revendication 1 ou 2,
**caractérisé**
**en ce que** l'élément ( 9 ) d'encliquetage est constitué sous la forme d'une plaque d'arrêt sensiblement en forme de V.
